Europäisches Patentamt

European Patent Office

Office européen des brevets

(11) Publication number: **0 498 037 A1**

# EUROPEAN PATENT APPLICATION

(21) Application number: **91117477.9**

(22) Date of filing: **14.10.91**

(51) Int. Cl.5: **B01D 29/39**, B01D 29/68, B01D 29/96

(30) Priority: **04.02.91 IT 26491**

(43) Date of publication of application:
**12.08.92 Bulletin 92/33**

(84) Designated Contracting States:
**AT BE CH DE DK ES FR GB GR IT LI LU NL SE**

(71) Applicant: **ECOTECNICA S.r.l.**
**Via Don Giacomo Vender 102**
**I-25127 Brescia(IT)**

(72) Inventor: **Hendricus, Laudy**
**Via Campane, 26**
**I-25100 Brescia(IT)**

(74) Representative: **Dr. Ing. A. Racheli & C.**
**Viale San Michele del Carso, 4**
**I-20144 Milano(IT)**

(54) **Tertiary filtration section for refining waste water.**

(57) The invention relates to a tertiary filtration section for refining waste water, to be located particularly downstream of a purification plant, comprising a set of filter panels (13) arranged in parallel rows (12) inside a treatment tank (11), on which a to-and-fro bridge crane (14) is foreseen carrying a counterwashing system for cleaning the filters and for suction from the bottom of the tank (11), as well as a lifting system (16) for extracting the panels (13) which are mounted on vertical perforated pipes (21), integral with a bottom pipe (20) which connects the panels of each row and through which the filtered water is drained.

FIG. 4

The present invention relates to a tertiary filtration section of a waste water treatment plant.

At present the limits set by Italian law for the pollutants present in water are as follows:

| - suspended solids | SS ≦ 80 mg/l |
| --- | --- |
| - BOD$_5$ | ≦ 40 mg/l |
| - total phosphorus | P ≦ 10 mg/l |

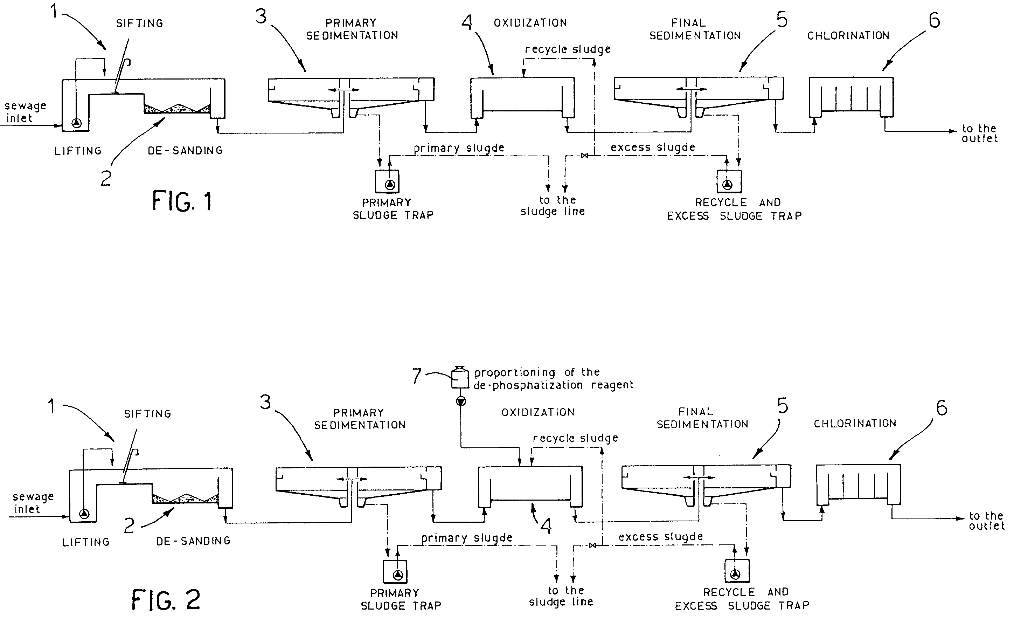

The removal limits of the above-mentioned pollutants, as far as urban waste water is concerned, can easily be achieved in a traditional purification plant consisting of mechanical pre-treatments (for instance sifting), de-sanding, primary sedimentation, oxidization with activated sludge, final sedimentation with re-circulating activated sludge, and possible disinfection (chlorination), as illustrated in the diagram of appended figure 1.

Purification plants for small urban communities or those which treat industrial waste water with a predominantly organic pollution content usually do not have one or more of the sections shown in the diagram of figure 1: they can, for example, lack the sand trap, the primary sedimentation and the chlorination.

For the draining of waste water into lakes or within a coastal band within ten kilometres from the lakes, the legal limits relating to the total phosphorus are 0,5 mg/l and 1,5 mg/l respectively.

In order to comply with these limitations on the concentration of the total phosphorus, the plants are equipped with a tertiary treatment for destroying the phosphorus; the tertiary de-phosphatization treatment can be realized chemically, as shown in diagrammatic form in figure 2, biologically or with a mixed chemical-biological system.

In any case it is very difficult to comply with the de-phosphatization limits mentioned above (0,5 and 1,5 mg/l), since inorganic or organic particles rich in phosporus are always present in the purified water.

In addition, the present trend, which should shortly mean a revision of the legal limits, is to reduce the allowed limits for the previously stated pollutants as follows: SS≦10 mg/l; BOD$_5$≦10 mg/l; P≦1 mg/l.

At the moment reduced limits with respect to Italian national legislation are required under certain regional laws and/or regulations for the re-use of purified waste water for irrigation purposes.

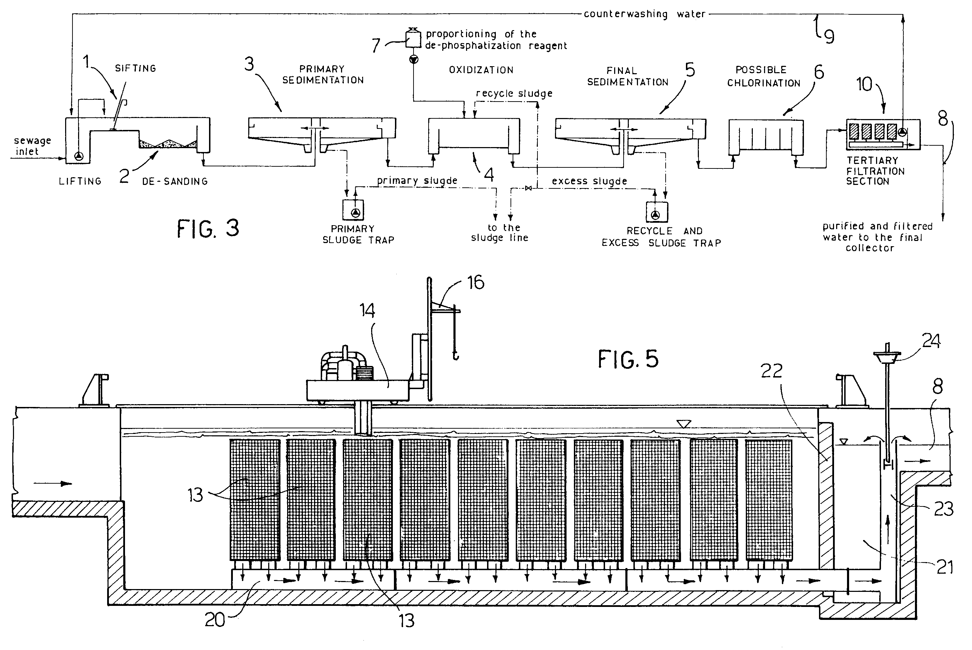

To comply with these more restrictive limits of pollutants, a tertiary filtration section according to the general diagram in figure 3 is added downstream of the plants shown in figures 1 and 2, precisely for carrying out the forced removal of the pollutants described above.

Such tertiary filtration section makes use of such filters intended to hold the flakes in suspension in the water.

At present filters for this purpose are used with one or two revolving drums consisting of a perforated plate reinforcement covered by a multi-layer filter cloth.

These types of filters have the main drawback of a limited filtering surface; the size of the drums cannot, in fact, be increased beyond a certain limit.

Other drawbacks occur during the filter-cleaning phase by means of counterwashing with suction from the inside of the drums in motion, which gives rise to turbulence.

Another big disadvantage with these known filters is that every time the filter cloth requires replacing, the plant must be brought to a standstill and one must enter the tank to carry out the replacement, which turns out to be a rather long and laborious operation.

The aim of the invention is to eliminate the above drawbacks by providing a tertiary filtration section whose filters have an extensive filtering surface, which are easy to replace without bringing the plant to a standstill, and in which counterwashing can be carried out in a very simple manner with a single mobile system, keeping the filters fixed.

This aim is achieved according to the invention, as defined in the appended claims.

In particular, the filtration section consists of one or more filtration modules, each comprising a set of parallelepiped-shaped filter panels, arranged in several rows or lines, and supported by vertical perforated pipes rising from bottom pipes (one for each line), through which the filtered water is drained.

The whole filtration module is served by a to-and-fro bridge crane moving on tracks and carrying aboard the pumps for counterwashing the filtering panels and the servovalves for carrying out the counterwashing sequences required and programmed by means of a control unit.

At the end of each line the corresponding bottom pipe is provided with operable traps with a hand wheel for shutting off the line itself when the filter cloths on the panels are being replaced, so as to avoid the complete shutdown of the plant.

The application of the filters according to the present invention onto the plants shown in the diagrams in figures 1 and 2 is the most significant example; however, such filters can be applied to other types of purification plants, for example plants in which the biological section, instead of working with activated sludge, consists of percolators, biodisks, fluid beds, and so on.

Further characteristics of the invention will become clearer in the detailed description which follows, referring to one of its purely exemplary, and therefore not restrictive embodiments shown in the appended drawings, in which:

Figure 1      is a diagram of a traditional purification plant;

Figure 2      is the diagram of the plant in figure 1 with the addition of a de-phosphatizing section;

Figure 3      is the diagram of the plant in figure 2, downstream of which the tertiary filtration plant according to the invention has been added;

Figure 4      is a diagrammatic top plan view of the tertiary filtration section according to the invention;

Figure 5      is a longitudinal diagrammatic section of the filtration module, taken along the line V-V in figure 4;

Figure 6      is a diagrammatic transverse section of the filtration module, taken along the line VI-VI of figure 4;

Figure 7      is a broken-off axonometric view of a filter panel according to the invention;

Figure 8      is a section of the panel taken along the line VIII-VIII in figure 7;

Figure 9      is a sectional view, as in figure 8, of the counterwashing phase;

Figure 10     shows an axonometric view of the counterwashing phase;

Figure 11     is a diagrammatic transverse sectional view of two rows of panels, showing the phase of suction from the bottom of the tank;

Figure 12     is a diagrammatic longitudinal view showing the filter panel replacement phase.

As can be seen in the diagram in figure 3, the tertiary filtration section for refining waste water according to the invention, shown as a whole with reference number 10, is located downstream of a traditional purification plant, shown in figure 2 and comprising a mechanical pre-treatment section 1, particularly sifting, a desanding section 2, a primary sedimentation section 3, an activated sludge oxidization section 4, a final sedimentation section 5 with re-circulation of activated sludge, a possible disinfection 6 (chlorination) section and a possible de-phosphatizing section 7, foreseen in correspondence to the oxidization section 4. Two ducts 8 and 9 come out from the tertiary filtration section 10, respectively for the purified and filtered water, which goes to the final collector, and for the counterwashing water, which carry the pollutants removed by the tertiary filters to the head of the plant.

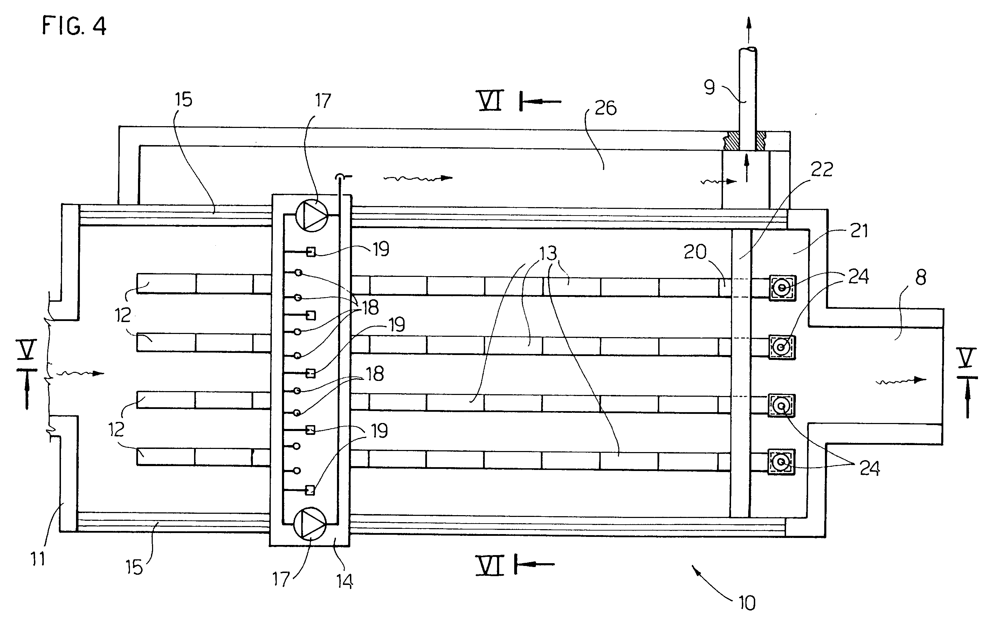

With reference to figures 4 to 12 the tertiary filtration section according to the invention will now be described, to which, as already said, the water coming out from the purification plant in figure 1 or 2 is fed, with the possible addition of a flocculator substance to cause the coagulation of the particles in suspension, in such a way as to aid their further filtration.

The filtration section can consist of one or more modules. In figure 4 a single filtration module is illustrated in plan, comprising a rectangular plan container tank 11, made of concrete or in metallic structural work, inside which several lines or rows 12 of filter panels 13 are arranged in a longitudinal direction. Preferably each filtration module comprises up to a maximum of 8 rows and 10 panels for each row, for a maximum total of 80 panels, and is served by a to-and-fro bridge crane 14 which moves on tracks 15, foreseen at the top of the longitudinal side walls of the tank 11.

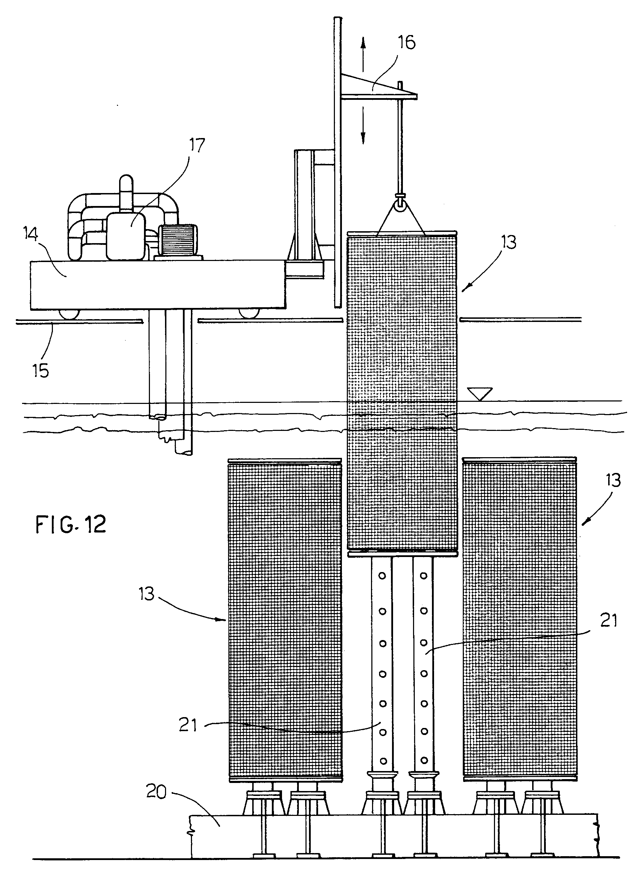

Elevator means 16 are foreseen on the bridge crane for lifting the filter panels 13 during the replacement phase (figure 12), and pumps for counterwashing 17, as well as suction pipes 18 of the panels from the counterwashing and suction pipes 19 from the bottom of the tank, as will be described more clearly below; the various suction pipes are operated by servovalves which carry out the sequences of counterwashing desired and programmed by a control unit (not shown).

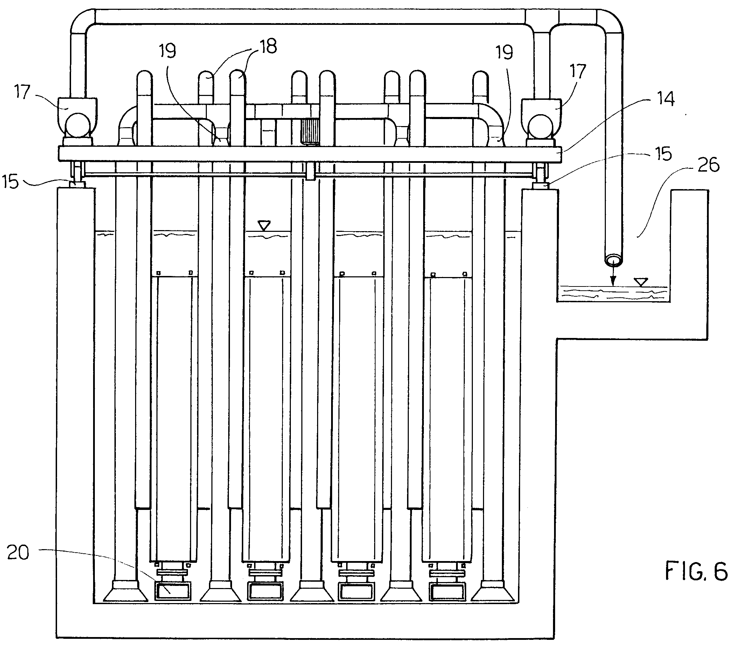

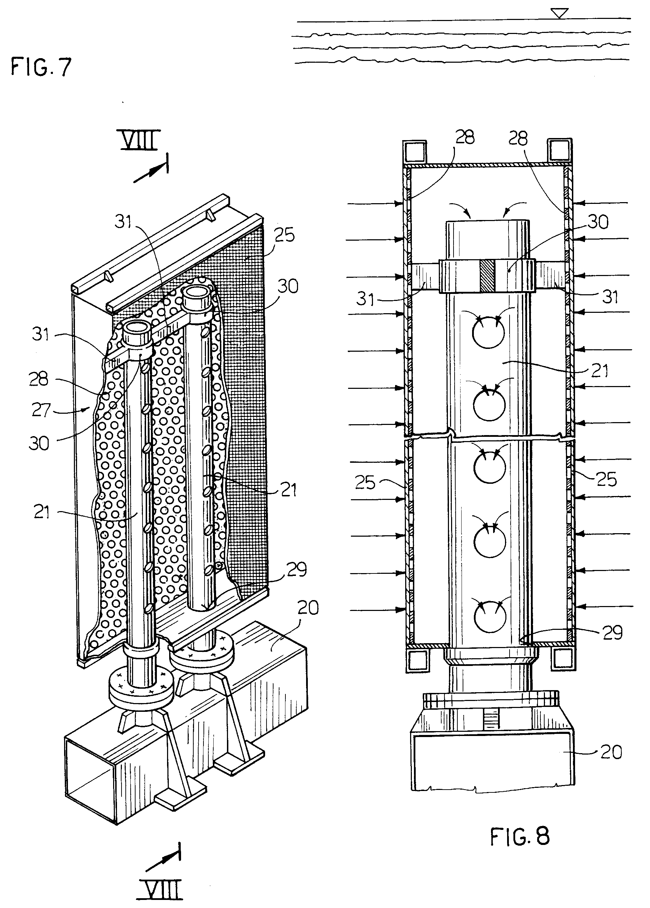

Each row 12 of filter panels is mounted on a respective metal pipe 20, suitably square in section (see in particular figure 7), lying on the bottom of the tank 11, and intended to support the panels themselves, by means of pairs of vertical perforated pipes 21, as will be shown more clearly below, through which the filtered water is collected and conveyed into a trap 21, from which it is drained off to the final collector by means of the said duct 8. As can be seen in detail in figure 5, the bottom pipes 20 cross a transverse bulkhead 22 of the tank 11 and flow out into the trap 21 with respective vertical pipes 23, which end at a height lower than that corresponding to the free surface of the water in the tank, as shown with small triangles.

A trap 24 operable with a hand wheel operates on each vertical tube for shutting off the corresponding row of panels during replacement of the filter cloths, or felts 25 on the panels themselves. This solution allows replacement of the filter cloths on the panels of one row without interrupting the filtration process on the other rows of panels.

The counterwashing water is rich in solid filtered particles and is pumped into a raceway 26 (figure 4), and thence, as already said, flows through the duct 9 to the head of the purification plant, where these particles will be treated in the primary sedimentation section 3 and/or in the final sedimentation section 5 (figure 3).

As can be seen particularly in figure 7, each filter panel consists of a parallelepiped-shaped metallic structure work 27, on whose two main perforated plate faces 28 the filter cloths 25 are applied, while the other faces of the panel are closed by watertight sealed plates. On the lower face of the panel two holes 29 are foreseen, through which the perforated support pipes 21 pass, integral with the square bottom pipe 20. In order to improve the stability of the panel, two guide rings 30 are foreseen inside it, coaxial with the holes 29, and supported by the metallic structure work 27 by means of arms 31.

As shown diagrammatically in figures 7 and 8, filtration takes place with the flow of the water to be filtered from the outside towards the inside of the panel: in this way the particles contained in the water (suspended solids) are held back on the filter cloths or felts 25, while the filtered water which penetrates in the panel 13 enters the perforated vertical support pipes 21 and is drained off through the square horizontal bottom pipe 20.

Since the solid paricles held back by the felts 25 tend to block them and to increase their loss of load, the particles must be removed periodically with an operation defined as counterwashing, mentioned above.

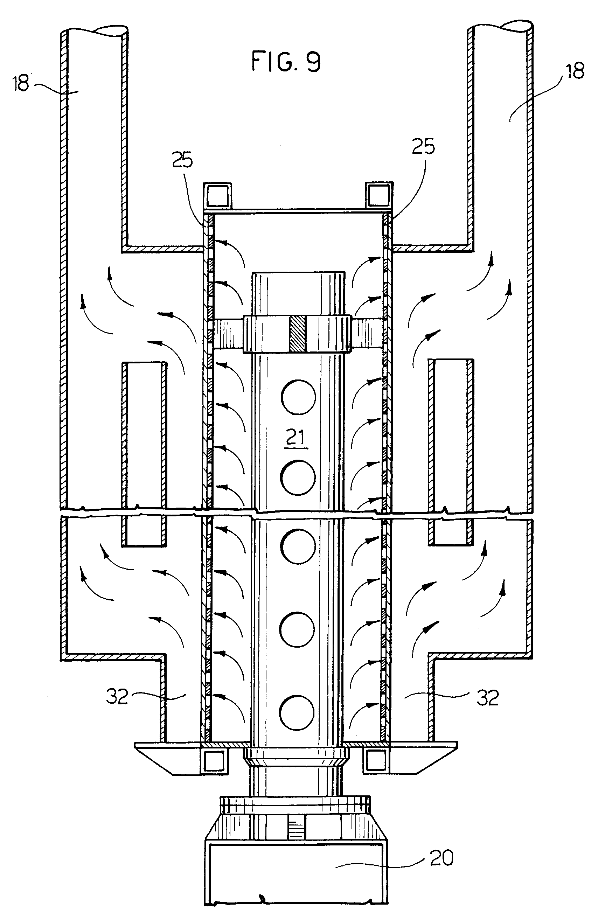

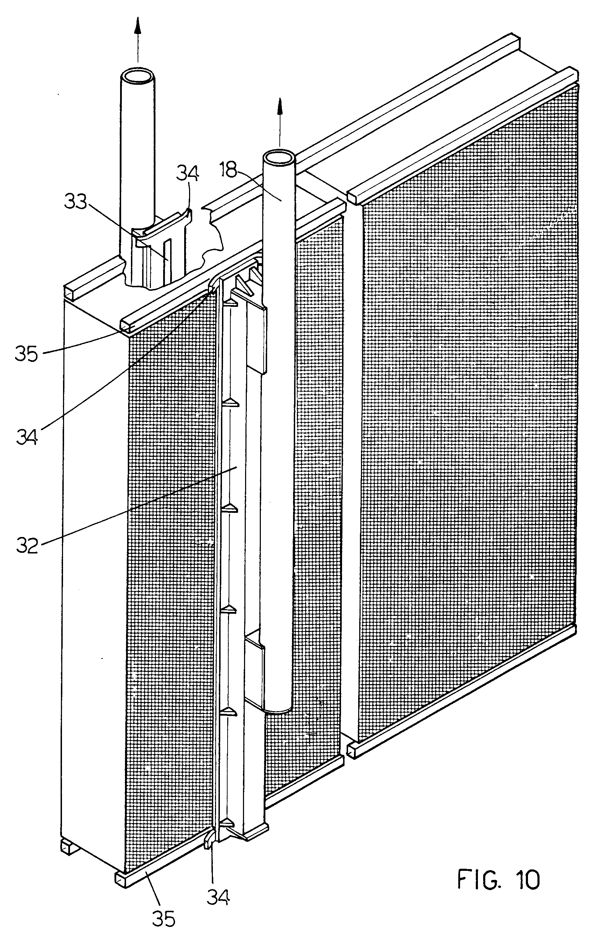

During the counterwashing (see particularly figures 9 and 10), which is carried out at intervals of time calculated with an algorithn which takes account at the same time of the load losses and the rate of flow filtered, the flows of water are inverted with respect to filtration; for this purpose, one of the self-priming type pumps 17 is set in operation and sucks the filtered water from the inside of the panel 13 in treatment by means of one of the suction pipes 18 and a corresponding suction box 32, provided with a vertical suction slit 33, which slides along the filter cloth 25, moving forward with the bridge crane in the longitudinal direction of the tank 11. In this way the particles deposited on the felt 25 are removed with the counterwashing water and conveyed through various raceways and pipes, as already said, to the head of the purification plant.

In order to limit wear and tear on the filter cloths 25, the rest forces of the suction box 32 are unloaded by means of sliding blocks 34 on special longitudinal guides 35 foreseen on the lower and upper sides of each panel. The sliding blocks 34 have their ends suitably curved outwards, so as to avoid the risk of crawling during the passage from one panel to the next.

Preferably the traverse speed of the suction boxes 32, connected with the bridge crane 14, is rather slow, for example 0,03-0,04 m/sec, thus limiting further the wear and tear on the filter cloths 25.

As illustrated in the appended figures, and in particular in figures 9 and 10, two counterwashing suction boxes 32 for cleaning both sides of each panel act on each panel 13 in the row 12; however, during the movement of the bridge crane 14, one side of the panels in a row is cleaned at a time, so as not to disturb the panels too much. Therefore, only one suction bow 32 works during one travel of the bridge crane.

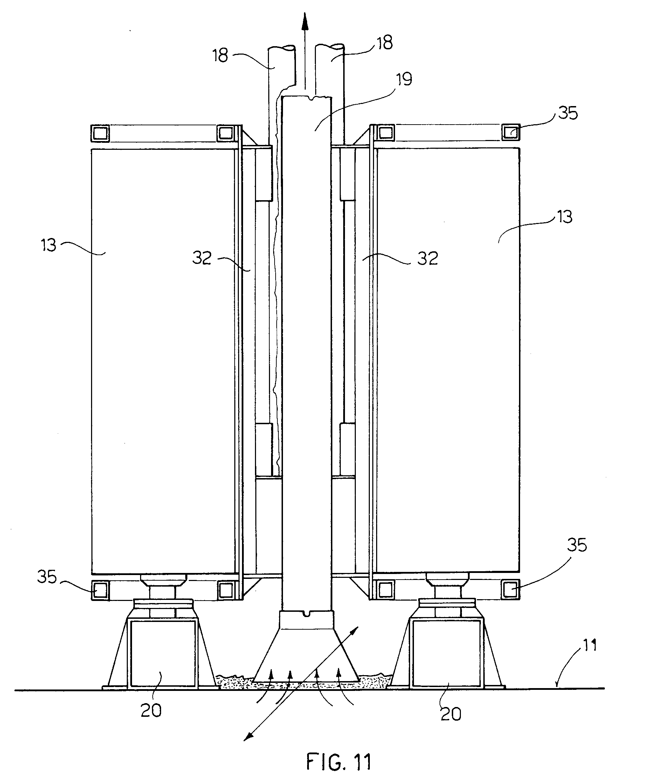

Since some of the heavier particles contained in the water to be filtered may precipitate and settle on the bottom of the filtration tank 11, the counterwashing system is provided, as already described, with aspirators 19, which once a day or when necessary remove the sedimented particles from the bottom of the tank and send them, by means of the counterwashing pumps 17, the collection raceway 26 and the duct 9, to the head of the purification plant, where they also will be then held back by the primary sedimenter 3 and/or the final sedimenter 5. During this phase, the system of electrovalves associated with the suction pipes carried by the bridge crane 14 excludes from suction the suction boxes 32 for cleaning the filter cloths 25, and activates the bottom aspirators 19 which go longitudinally along the tank 11, passing between adjacent rows of filter panels (see in particular figure 11).

The maintenance of the filter cloths 25 or the replacement of the same as a result of wear and tear can be carried out with a filtration section working, by shutting off one row of panels at a time by means of the appropriate traps 24.

For this purpose, as shown in diagrammatic form in figure 12, one filter panel 13 is taken out at a time, by means of the lifting system 16 carried by the to-and-fro bridge crane 14.

The filtration speeds for applications regarding urban waste water, with the filtration unit according to the invention, go from 10 m/h (10 m$^3$/h per m$^2$ of surface) at maximum flow rate during rain to 6 m/h at maximum flow rate in dry weather.

For industrial applications the maximum filtration speeds are to be evaluated for each single case.

For urban waste water and with the above filtration speeds the following limits can be achieved, for the pollutants which can be removed with filtration:

EP 0 498 037 A1

| | |
|---|---|
| - suspended solids | SS ≤ 10 mg/l |
| - $BOD_5$ | ≤ 10 mg/l |
| - phosphorus in particles, removal between | 50-70% |
| - organic nitrogen in particles, removal between | 50-70% |

More forced removal can be obtained by the use of filter cloths 25 with a greater filtration capacity, to the detriment, obviously, of the filtration speed.

The main advantages which are the object of the present invention are as follows:

- modular construction;
- elevated filtering surface for each module, reaching a maximum value of about 400 $m^2$ per module;
- counterwashing system which does not cause wear and tear on the filter cloths;
- suction of sedimented particles from the bottom;
- easy extraction of the filter panels;
- possibility of replacing the filter cloths while the filters are working;
- the only moving part is the bridge crane 14, which is preferably moved at a very low speed, of about 0,03-0,04 m/sec;
- high degree of filtration efficiency.

## Claims

1. A tertiary filtration section for refining waste water, to be located for example downstream of a purification plant, and comprising at least one filter (13), made up of a perforated plate reinforcement, covered by a filter cloth, and comprising also a system of counterwashing which sucks from the inside of the filter during its cleaning phase, characterized in that it comprises at least one filtration module (10) made up of a tank (11), inside of which a set of filter panels (13) are arranged positioned in several parallel rows (12) going in the longitudinal direction of the tank (11), the said counterwashing system being carried by a to-and-fro bridge crane (14) movable longitudinally on the tank (11).

2. A filtration section according to claim 1, characterized in that the filter panels (13) of a row (12) are mounted by means of perforated support pipes (21) onto a bottom pipe (20), through which the filtered water is drained.

3. A filtration section according to claim 2, characterized in that each bottom pipe (20) is provided with a trap (24) for shutting off, in case of need, the corresponding row of panels, without interrupting the filtration process in the other rows.

4. A filtration section according to any one of the previous claims, characterized in that the said counterwashing system carried by the bridge crane (14) comprises at least one suction pump (17) which sucks the filtered water selectively from the inside of each panel (13) by means of pipes (18) and respective suction boxes (32), provided with corresponding suction slits (33) which slide on the filter cloths (25) covering the panels, the counterwashing water, rich in solid filtered particles, being sent to the head of the purification plant.

5. A filtration section according to claim 4, characterized in that the said suction boxes (32) slide by means of sliding blocks (34) on suitable guides (35), the ends of the sliding blocks (34) being curved outwards to avoid crawling during the phase of passing from one filter panel to the next during the movement of the bridge crane (14).

6. A filtration section according to any one of the previous claims, characterized in that the said bridge crane (14) also carries suction pipes (19) for the bottom of the tank (11), interposed between adjacent rows (12) of panels, a system of electrovalves being foreseen, controlled by a control unit to carry out the desired counterwashing sequences and to activate the bottom aspirators (19).

7. A filtration section according to any one of the previous claims, characterized in that a lifting system (16) for extracting the filter panels (13) upwards is foreseen on the said bridge crane (14).

8. A filter, particularly for tertiary filtration of waste water, made up of a panel comprising a flattened parallelepiped-shaped metallic framework structure (27), on the two main faces of which filter cloths (25) are applied on perforated plate supports (28), the other faces of the panel being closed by watertight sealed plates.

9. A filter according to claim 8, characterized in that on the side bottom wall of the panel at least one through hole (29) is foreseen for the passage of a perforated support tube (21), integral with a pipe (20) for draining the filtered water.

10. A filter according to claim 8 or 9, used in combination with other equal filters arranged in parallel rows (12) in a filtration section according to any one of the claims from 2 to 7.

EP 0 498 037 A1

**FIG. 1**

1 SIFTING

3 PRIMARY SEDIMENTATION

4 OXIDIZATION

recycle sludge

FINAL SEDIMENTATION 5

CHLORINATION 6

sewage inlet

LIFTING   DE-SANDING

2

PRIMARY SLUDGE TRAP

primary slugde

to the sludge line

excess sludge

RECYCLE AND EXCESS SLUDGE TRAP

to the outlet

**FIG. 2**

7 proportioning of the de-phosphatization reagent

1 SIFTING

3 PRIMARY SEDIMENTATION

OXIDIZATION

recycle sludge

FINAL SEDIMENTATION 5

CHLORINATION 6

sewage inlet

LIFTING   DE-SANDING

2

4

PRIMARY SLUDGE TRAP

primary slugde

to the sludge line

excess sludge

RECYCLE AND EXCESS SLUDGE TRAP

to the outlet

counterwashing water

7 — proportioning of the de-phosphatization reagent

1 — SIFTING

3 — PRIMARY SEDIMENTATION

OXIDIZATION

recycle sludge

5 — FINAL SEDIMENTATION

6 — POSSIBLE CHLORINATION

10 — TERTIARY FILTRATION SECTION

9

8

sewage inlet

LIFTING    2 — DE-SANDING    4

primary sludge    excess sludge

PRIMARY SLUDGE TRAP

to the sludge line

RECYCLE AND EXCESS SLUDGE TRAP

purified and filtered water to the final collector

**FIG. 3**

**FIG. 5**

16    14    13    20    13    22    24    8    23    21

EP 0 498 037 A1

FIG. 4

EP 0 498 037 A1

FIG. 6

FIG. 7

FIG. 8

FIG. 9

FIG. 10

FIG. 11

FIG. 12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | DE-A-2 005 548 (AMERICAN MACHINE & FOUNDRY) | 1,4,10 | B01D29/39 |
| A | * page 1 - page 6; figures 1-8 * | 3 | B01D29/68 |
| | --- | | B01D29/96 |
| Y | WO-A-9 008 587 (LINDE AG) | 1,4,10 | |
| | * page 1 - page 10; figures 1-3 * | | |
| | --- | | |
| A | GB-A-18 234 (E. ILIVIER-ALPHAND) 1914 | 1,8,9 | |
| | * page 1 - page 2 * | | |
| | --- | | |
| A | US-A-2 996 189 (P.C. SALTERBACH) | 7 | |
| | * figure 1 * | | |
| | --- | | |
| A | NL-A-8 103 750 (STORK) | 1 | |
| | * figure 1 * | | |
| | --- | | |
| A | DE-A-3 903 813 (R. BOTT) | 1 | |
| | * figures 1-7 * | | |
| | ----- | | |
| | | | TECHNICAL FIELDS SEARCHED (Int. Cl.5 ) |
| | | | B01D |

The present search report has been drawn up for all claims

| Place of search | Date of completion of the search | Examiner |
|---|---|---|
| THE HAGUE | 21 MAY 1992 | DE PAEPE P.F.J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)